Europäisches Patentamt

European Patent Office

Office européen des brevets

(19)

(11) Publication number: **0 104 019**
**B1**

(12) **EUROPEAN PATENT SPECIFICATION**

(45) Date of publication of patent specification: 26.11.86

(51) Int. Cl.⁴: **H 04 N 5/262, H 04 N 9/09**

(21) Application number: 83305156.8

(22) Date of filing: 06.09.83

(54) Image correction.

(30) Priority: 09.09.82 GB 8225709
09.09.82 GB 8225710
09.09.82 GB 8225707
09.09.82 GB 8225706
09.09.82 GB 8225705
09.09.82 GB 8225704
09.09.82 GB 8225701

(43) Date of publication of application:
28.03.84 Bulletin 84/13

(45) Publication of the grant of the patent:
26.11.86 Bulletin 86/48

(84) Designated Contracting States:
AT BE CH DE FR GB IT LI LU NL SE

(56) References cited:
DE-A-2 636 209
DE-A-3 107 042
DE-A-3 114 888
US-A-4 320 414

PHILIPS TECHNISCHE RUNDSCHAU, vol. 38,
no. 11/12, 1979, Eindhoven, A. HOYER, M.
SCHLINDWEIN "Bildverbesserung durch
digitale Nachverarbeitung", pages 311-323

(73) Proprietor: LINK ELECTRONICS LIMITED
North Way Walworth Industrial Estate
Andover Hampshire (GB)

(72) Inventor: Groves, Philip Rangecroft
32 Lynch Hill Park
Whitchurch Hampshire, RG28 7NF (GB)
Inventor: Littlejohn, Hugh Kendal
19 Guenevere Close King Arthur's Way
Andover Hampshire SP10 4BU (GB)

(74) Representative: Sturt, Clifford Mark et al
MARKS & CLERK 57-60 Lincoln's Inn Fields
London WC2A 3LS (GB)

# Description

The present invention relates to image correction and is particularly applicable to image correction in television cameras.

A television camera has an optical system which directs incident radiation onto a camera tube from which electronic signals are obtained. A number of phenomena occur for which correction is required if an acceptable quality television picture is to be produced. The number of phenomena requiring correction is considerably increased for color television cameras.

Such corrections have in the past been applied by manual adjustment of the relevant controls as determined by their effect upon the final image. Manual adjustment is unreliable, time consuming and generally disadvantageous.

Automatic arrangements have been employed in which a correction signal is applied to the circuitry of the camera or to the electronic signal of the image. These signals are of predetermined form and depend upon the particular phenomena which is being corrected.

Although this technique has been developed so as to introduce complex correction signals, the signals are predetermined in accordance with mainly theoretical considerations.

The corrections applied are calculated for a standard camera tube and therefore any deviation of a tube from the standard will cause a deterioration in performance.

US Patent 4285004 assigned to Ampex Corporation discloses an error measurement and correction circuit using digital memory means in a camera head combined with error measurement means disposed within a central control unit remote from the camera.

US Patent 3996421 assigned to Hughes Aircraft Company discloses a display system utilising a "sliding window" effect for enhancing the contrast of an image.

US Patent 4320414 assigned to Tokyo Shibaura Denki Kabushiki Kaisha discloses apparatus comprising a signal processing circuit, a data detecting circuit for detecting an adjusting data from the signal processing circuit, and an arithmetically operating circuit for calculating a correcting data from a reference data and the adjusting data. The main thrust of the patent is concerned with the fact that the correcting data is stored in a volatile memory and the patent discloses an arrangement including a non-volatile back-up for the main memory.

According to a first aspect of the present invention there is provided apparatus for correcting defects in an image having a plurality of picture elements, comprising monitoring means for monitoring the value of a parameter from each of the picture elements, processing means for calculating a correction signal from the parameter values and control means for applying the correction signal to correct the image defects characterized in that the processing means comprises two multipliers each of which multiplies one of two adjacent line or field parameter values by a respective reference signal which has a frequency equal to half the frequency of occurrence of the picture elements whose values are being multiplied, the reference signals being in anti-phase with each other, and by a summing circuit for summing the multiplied values, whereby calculation of the correction signal includes a smoothed interpolation.

According to a second aspect of the present invention, there is provided a method of correcting defects in an image having a plurality of picture elements, comprising measuring the value of a parameter at each of the plurality of picture elements, calculating a correction signal from the parameter values and applying the correction signal to correct image defects characterised in that calculation of the correction signal includes multiplying each of two adjacent line or field parameter values by a respective reference signal which has a frequency equal to half the frequency of occurrence of the picture elements whose values are being multiplied, the reference signals being in anti-phase with each other, and by summing the multiplied values, whereby the calculation includes a smoothed interpolation.

One of the above described corrections relates to focus correction.

The image viewed by a television camera is focussed with the camera tube by the generation of an axial magnetic field within the tube in conjunction with an electrostatic field. The magnetic field is set up by passing a current through a magnetic coil, referred to as a yoke, and an electrostatic field is set up by applying a voltage to a focussing electrode. Due to certain well known phenomena the electronic image produced by a camera tube corresponds to a curved object plane and consequently the camera tube image of a flat object is not uniformly focussed. It is known to apply a correction signal to the camera tube electrostatic field in order to compensate for this lack of uniformity of focus. However, conventional correction signals are derived from mainly theoretical considerations and a standard predetermined correction signal is applied to the camera tube image. The resulting focus correction is frequently less than the optimum focus correction especially since each tube/yoke combination will have a slightly different maximum focus object plane of electro-beam focus correction.

Consequently a preferred embodiment of the present invention provides focus correction apparatus for an electro-optical tube comprising monitoring means for measuring the optimum focus parameter value at each of a plurality of picture elements, processing means for calculating a correction signal from the measured values and control means for applying the correction signal to correct the focussing of images produced by the electro-optical tube and in which the processing means are as specified in the first aspect of the invention.

An associated embodiment of the present invention provides a method of focus correction for an electro-optical tube comprising the steps of measuring the optimum focus parameter value at each of a plurality of picture elements, calculating a correction signal from the measured values and applying the correction signal to correct the focussing of images produced by the electro-optical tube and in which the calculation includes the calculation as specified in the second aspect of the invention.

Preferably, for each picture element a preset range of focussing voltages is tested so as to identify the voltage which results in the maximum focus parameter value amplitude. The identified voltage represents the optimum focus for the picture element.

Advantageously, the picture element signal is band pass filtered in order that the high frequency energy from the edge of the picture element is used for determining the maximum signal amplitude.

Where a camera contains a number of camera tubes it is necessary for the tubes to have a common spatial registration. For example, in a colour television camera, it is necessary for the three colour tubes to have a common spatial registration. Such a registration must be optimised in order to avoid blurring of the final image. A similar requirement exists for a colour television tube in which the electron guns require registration with each other.

Consequently, in a further preferred embodiment of the present invention there is provided apparatus for calculating relatively small errors in the spatial registration of an electro-optical tube, comprising a reference generator which generates a plurality of reference picture elements, monitoring means which monitor the picture signals of the tube derived from said reference picture elements, comparator means which compare picture element and reference picture element signals, displacement means which, for each picture element, displaces the picture element in a first direction to a position of relatively large registration error, as measured by the comparator means, and which displaces the picture element in a direction opposite the first direction to a position of substantially the same relatively large registration error, as measured by the comparator means, processing means for calculating, from the displacements effected by the displacement means, the position of optimum spatial registration and an error signal representing the initial error in spatial registration of the picture element, further processing means for calculating a correction signal from the calculated picture element error signals, the further processing means comprising two multipliers each of which multiplies one or two adjacent line or field parameter values by a respective reference signal which has a frequency equal to half the frequency of occurrence of the picture elements whose values are being multiplied, the reference signals being in anti-phase with each other, and a summing circuit for summing the multiplied values, whereby calculation of the correction signal includes a smoothed interpolation, and control means for applying the correction signal to compensate images produced by the camera tube for errors in spatial registration of the tube.

An associated embodiment of the present invention provides a method of calculating relatively small errors in the spatial registration of an electro-optical tube comprising the steps of generating a plurality of reference picture elements, monitoring the picture element signals of the tube derived from said reference picture elements, comparing picture element and reference picture element signals, for each picture element, displacing the picture element in a first direction to a position of relatively large registration error, displacing the picture element in a direction opposite the first direction to a position of substantially the same relatively large registration error, calculating, from the displacements effected, the position of optimum spatial registration and an error signal representing the initial error in spatial registration of the picture element, calculating a correction signal from the calculated picture element error signals, the calculation of the correction signal including multiplying each of two adjacent line or field parameter values by a respective reference signal which has a frequency equal to half the frequency of occurrence of the picture elements whose values are being multiplied, the reference signals being in anti-phase with each other, and summing the multiplied values, whereby the calculation includes a smoothed interpolation, and applying the correction signal to compensate images produced by the tube for errors in spatial registration of the tube.

The vignetting of images produced by an electro-optical tube and correction thereof is known. Image vignetting is also present in some solid state image producing devices. The problem of vignetting is particularly noticable in images produced by devices such as colour television broadcast cameras. Each of the three colour camera tubes will produce a slightly different vignetting and the final image will exhibit colour shading. The vignetting produced by each camera tube is conventionally compensated by multiplying a correction signal by the camera tube output. The correction signal is usually of a simple parabolic waveform and although the resulting correction is acceptable this conventional method is tedious and must be undertaken by a skilled technician.

A further embodiment of the present invention provides apparatus for correcting image vignetting comprising monitoring means for monitoring the signals from each of a plurality of picture elements, processing means for calculating a correction signal from the monitored signals and control means for applying the correction signal to correct vignetting of images and in which the processing means are as specified in the first aspect of the invention.

Similarly, an associated aspect of the present invention provides a method of correcting image vignetting comprising the steps of monitoring the signals from each of a plurality of picture elements, calculating a correction signal from the monitored signals and applying the correction signal to correct vignetting of images and in which the calculation includes the calculation as specified in the second aspect of the invention.

It is known that even in the presence of only bias lighting the image produced by a camera tube exhibits shading. Bias lighting is provided for a camera tube so as to reduce lag when the camera tube image changes. The bias lighting does not correspond to flat field illumination and it is therefore necessary to correct the output of the camera tube to avoid shading in the final image.

Conventionally, such correction is achieved by the addition of parabolic and sawtooth waveforms to the output of the camera tube. However, this is tedious and may fail to provide complete correction.

A further preferred embodiment of the invention therefor provides apparatus for correcting image black shading comprising monitoring means for monitoring the signals produced by bias lighting from each of a plurality of pictures elements, comparator means for comparing each monitored signal with a reference to provide an error value for each picture element, processing means for calculating a correction signal from the error values and control means for applying the correction signal to correct images and in which the processing means are as specified in the first aspect of the invention.

In a corresponding embodiment the present invention there is provided a method of correcting black shading comprising the steps of monitoring the signals produced by bias lighting from each of a plurality of picture elements, comparing each monitored signal with a reference to provide an error value for each picture element, calculating a correction signal from the error values and applying the correction signal to correct images and in which the calculation includes the calculation as specified in the second aspect of the invention.

Errors are introduced into the image produced by a television camera tube due to geometric phenomena of the camera. The errors can be caused by the geometry of the camera tube and/or scanner yoke itself. Further errors can be introduced by non-linearities of image scanning within the camera tube. Such errors in general are more prevalent towards the edges of the image. Geometric errors can be caused by non-linearities of scanning yoke current wave forms and by pin cushion or barrel distortion in image scanning.

Conventionally, electrical input to the camera tube yoke has been varied manually so as to obtain the most acceptable final image. This requires a skilled operator, is tedious and often does not provide optimum results.

In a further preferred embodiment of the present invention there is provided image correction apparatus for correcting errors in the image produced by an electro-optical tube due to geometric phenomena comprising monitor means for monitoring the value of a parameter from each of a plurality of picture elements, processing means for calculating a correction signal from the parameter values and control means for applying the correction signal to correct images produced by the electro-optical tube and in which the processing means are as specified in the first aspect of the invention.

Similarly, a further preferred embodiment of the present invention provides a method of correcting errors in the image produced by an electro-optical tube due to geometric phenomena comprising the steps of monitoring the value of a parameter from each of a plurality of picture elements calculating a correction signal from the parameter values and applying the correction signal to correct images produced by the electro-optical tube and in which the calculation includes the calculation as specified in the second aspect of the invention.

The optical arrangement of a camera lens can introduce defects in an image produced by a camera tube. Such defects are a particular problem in situations where the focal length of the camera lens is varied, either by changing lenses or by the use of zoom lenses. Zoom lenses used with television broadcast cameras can establish focal length ratios of up to 42:1. Such dramatic changes in focal length are, of course, accompanied by equally dramatic changes in the angle of view and such changes in the angle of view can severely aggravate defects in the image produced by the camera tube. Lateral chromatic abberation defects which vary with focal length also present an important problem to be solved.

Another embodiment of the present invention provides apparatus for correcting camera lens produced defects in an image produced by a camera tube comprising monitoring means for monitoring a parameter value for each of a plurality of picture elements, processing means for calculating a correction signal from the parameter values, control means for applying the correction signal to correct image defects and scaling means for scaling the correction signal in accordance with variations of focal length of the camera lens and in which the processing means are as specified in the first aspect of the invention.

Advantageously, in each embodiment, calculation of the correction signal involves a feedback configuration. A first correction is applied and its effect monitored. The correction is adjusted, if necessary, and a repetitive sequence undertaken until the optimum correction is obtained.

An associated embodiment consists of a method of correcting camera lens produced defects in an image produced by a camera tube comprising monitoring a parameter value for each of a plurality of picture elements, calculating a correction signal from the parameter values, applying the correction signal to correct image defects and scaling the correction signal in accordance with variations of focal length of the camera lens and in which the calculation includes the calculation as specified in the second aspect of the invention.

Embodiments of the present invention will now be described by way of example only and with reference to the accompanying drawings, in which:—

Figure 1 is a diagrammatic representation of the interpolation of different signals.

Figure 2 is a block diagram of a circuit for implementing the interpolation illustrated by figure 1.

Figure 3 is a block diagram showing a focus correction apparatus.

Figure 4 illustrates the spatial registration of a picture element signal compared with a reference picture element.

Figure 5 illustrates a desired camera tube signal output, the actual output and the correction signal required to produce the desired output.

Figure 6 is a block diagram of part of the apparatus for correcting camera tube vignetting.

Figure 7 is a graph illustrating percentage change in geometry as a function of camera lens focal length.

In a television camera there are many features of the image produced which deviate from the ideal arrangement. Often the deviation results in a picture image of unacceptably poor quality. Automatic correction of such deviation may be provided by this invention.

The particular feature of the image to be corrected is selected. The correction apparatus is set so as to measure the relevant correction parameter value. The correction parameter value is then measured from each of a plurality of picture elements. The precise method of measuring the correction parameter value depends upon the correction being made, but will usually include comparison of a signal from each picture element with a respective reference signal.

Many features of the television camera will require a correction relating to precise elements of an image as viewed through the optical system of the camera. In such cases a test chart is located in front of the camera. The test chart contains a regular matrix of 15 rows and 15 columns of rectangular picture areas. The picture areas are identical and are simply areas of small white rectangles on a black background.

The value of the relevant parameter is measured from the signal produced by each of the picture areas on the test card. The measured values are converted to digital form in order to facilitate subsequent processing.

A circuit for monitoring values from the picture elements may include gate location of the individual picture elements, analogue processing of the gated video, analogue to digital conversion and storage in a RAM under the control of a CPU. The RAM stored values can be interpolated in real time to provide a correction signal which is applied for real time correction of the image defects.

A correction signal is calculated from the correction parameter values. In calculating the required correction signal it is necessary to process line and field data simultaneously.

Typically, the line rate is of the order of 10's of KHz and the field rate seldom exceeds a few hundred hertz. Low pass filtering is possible for line data but is not simultaneously possible for field data since such filtering would result in the loss of information from the line data. It is therefore necessary to use an interpolation technique.

Conventional interpolation techniques used in data processing utilise complex software. Such software can be expensive, difficult to maintain and will sometimes produce discontinuities in interpolation which would result in an unacceptable positional change in the image.

Interpolation of the correction parameter values can be implemented utilizing the scaling function of digital to analog converters. Other interpolation techniques may be used.

Each correction parameter value, in digital form, from a pair of adjacent field data picture elements is multiplied by a respective reference signal. The reference signals have a frequency equal to half the frequency of occurrence of field picture elements and the reference signals are in anti-phase with each other. The multiplied values are summed and thereby provide a smoothed interpolation.

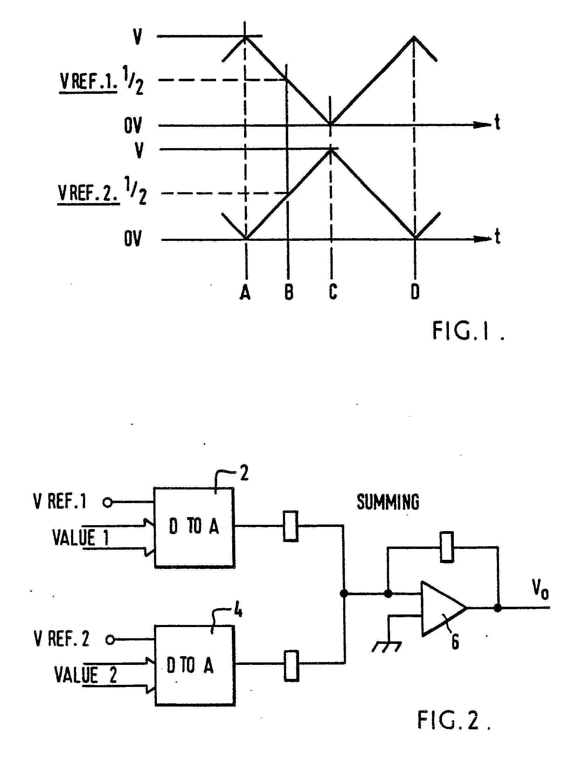

Figure 1 illustrates the field rate interpolation of information. Two reference signals are provided, V REF.1 and V REF.2. The frequency of the reference signals is half the frequency of occurrence of the picture elements whose values are being multiplied. V REF.1 and V REF.2 vary, in this example, linearly between maxima and minima and are in anti-phase with each other.

Interpolation between two adjacent field correction parameter values, value 1 and value 2, will now be considered. The reference signals vary between a minimum of 0 and a maximum of V. The first correction parameter value, value 1, is multiplied by V REF.1 and the second correction parameter value, value 2, is multiplied by V REF.2. Initially, V REF.1 has a value of V and V REF.2 has a value of 0. At time A in Figure 1 the sum of the correction parameter values multiplied by the respective reference signals is therefore V×value 1. Interpolating between value 1 and value 2, V REF.1 decreases to 0 while V REF.2 increases to V.

Consequently, when the interpolation is midway between the two values the situation will be as depicted by time B in Figure 1. Namely, the output signal will be equal to V/2×(value 1+value 2). Having completely traversed from the first picture element to the second picture element, the signals will be as depicted at time C in Figure 1. The output signal is now equal to V×value 2. The process is then repeated between value 2 and the next value, value 3. The temporal position of value 3 is represented by D in Figure 1.

A circuit for implementing the interpolation illustrated by Figure 1 is shown in Figure 2. The interpolation utilises the scaling function of digital to analog converters. Two digital to analog converters 2 and 4 are provided. V REF.1 is applied to an input of the converter 2 and V REF.2 is applied to an input the converter 4. Initially, value 1 is applied to an input of converter 2 and value 2 is applied to an input of converter 4. Outputs from the converters 2 and 4 are applied to a summing circuit 6. The value applied to each digital to analog converter 2 and 4 is changed when the respective reference signal, V REF.1 or V REF.2, reaches 0. Consequently, referring to Figure 1, at time C the value applied to converter 2 is changed from value 1 to value 3. Similarly, at time D the value applied to converter 4 is changed from value 2 to value 4.

In the vertical direction interpolation is achieved by mixing the outputs of two multiplying D/A converters. D/A 1 carries the values corresponding to row 1 of samples, while D/A 2 has the values for row 2. As the scan progresses down the picture the output from D/A 1 is reduced while the output from D/A 2 is increased. This produces a crossfade between the two convertor outputs thus providing vertical interpolation. When row 2 has been reached D/A 1 is loaded with the correction data for row 3 and the crossfade procedure is repeated with D/A 2 output decreasing as D/A 1 output increases. The effect of samples more than one row apart on the final analogue waveform is taken care of by iterative correction routines as described later. To cope with the waveforms required at the edges and the corners of the picture, offscreen software routines have been developed to interpolate into the blanking areas. Interpolation between sample areas in the horizontal direction, is achieved by filtering the analogue output of the D/A outputs.

Application of the above described technique to the correction of focus related errors will now be considered.

A test chart consisting of a matrix of fifteen rows and fifteen columns of identical rectangular white areas on a black background is provided for use in focus correction.

Focus correction is carried out for each individual camera tube of which there may be a number, for example in a colour television broadcast camera.

The focussing of a camera tube requires correction due to the fact that the camera tube image provides a uniform focus for a curved object plane. This defect is produced by well known phenomena and obviously requires correction. Conventionally, a predetermined correction signal has been applied to the camera tube electrostatic field, but such correction signals have been determined from theoretical considerations or by the trial and error application of correction signals. This invention provides a correction signal which is calculated from the optimum focus parameter value at each of a plurality of picture elements.

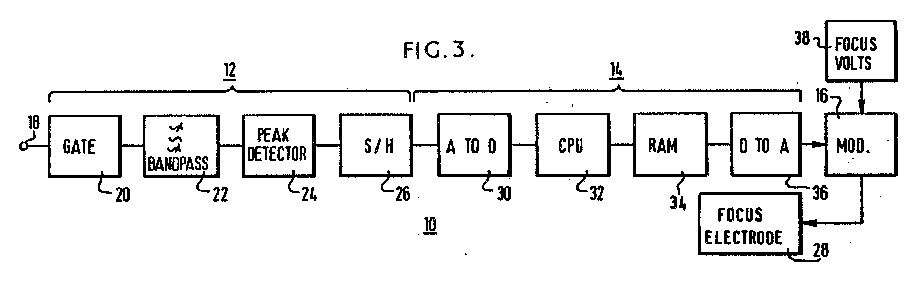

A camera tube is manually focussed on the test chart. A picture element signal is produced by the camera tube and is applied to the focus correction apparatus 10 shown in Figure 3.

The focus correction apparatus 10 comprises monitoring means 12 for measuring the optimum focus parameter value at each of the picture elements, processing means 14 for calculating a correction signal from the measured values and control means 16 for applying the correction signal to correct the electron beam focussing of the camera tube image.

The camera tube image signal is passed to the input 18 of the measuring circuit 12. The circuit 12 includes a gate circuit 20 which is responsive to the video signal of the picture element viewed by the camera and thus the picture area provided by the test chart. Gate location of the picture element with the picture area is undertaken prior to the initiation of the measuring sequence. The gated video signal is passed from the gate unit 20 to a band pass unit 22. The band pass unit 22 filters the picture element signal so that only the high frequency energy, presented in the video information of the picture area under investigation, is used for further processing. The filtered picture element signal is passed to a peak detector 24. The peak detector 24 detects the peak-to-peak amplitude of the filtered picture element signal. A sample and hold unit 26 receives peak-to-peak amplitude data from detector 24 and the units 20 to 26 constitute the measuring circuit 12.

Subsequent to gate 20 identifying registration of the camera tube picture element with a test chart picture area, the voltage applied to the tube focussing electrode 28, is increased in steps over a preset range of voltages. For each focussing electrode voltage the peak-to-peak amplitude is detected by the detector 24 and is passed to the sample and hold unit 26 and thus to a CPU which retains a record of which of the focus electrode voltages resulted in the maximum peak-to-peak amplitude of the picture element signal. Having determined and retained a record of the focus, the gate control is progressed so as to coincide with the next picture area of the test chart, until all the 225 locations or areas are tested. The values for focus are then compared to a previous pass and a correction is output to increase the focus at each location. The process is repeated until optimum focus is achieved in all locations.

The processing means 14 includes an analog to digital converter 30, a CPU 32, a RAM 34 and a digital to analog converter 36. The signal passed from the sample and hold unit 26 of the measuring circuit 12 is in analog form. That signal is converted by the analog to digital converter 30 and the digital information is stored in the RAM 34 under the control of the CPU 32. Under control of the CPU 32 the RAM 34 stores information relating to the signal received from each of the picture elements. When the measuring operation has been completed for all of the picture elements of the camera tube the RAM 34 in effect stores the correction signal necessary to compensate the camera tube image so as to simulate a flat object plane of uniform focus.

The real time application of the correction values stored in the RAM 34 to the focussing electrode voltage is inconvenient. Consequently, it is necessary to provide an interpolation of the value storage in RAM 34 in order to effect real time correction of the focussing electrode voltage. The digital-to-analog unit 36 is used to provide a smoothed interpolation in the manner described above with reference to Figures 1 and 2. The signal derived from interpolation by unit 36 is applied to the modulator 16 which is interposed between the focus voltage supply 38 and the focussing electrode 28. Unit 36 modulates the supplied focus voltage in accordance with the interpolated signal from unit 36 so that the voltage received by the focussing electrode 28 is fully corrected, whereby optimum focussing of the camera tube image is provided.

Interpolation of the value stored in RAM 34 utilises the scaling function of digital to analog converters. The values from two adjacent picture elements are each multiplied by a respective reference signal and the multiplied values are summed. Multiplication of the values from RAM 34 is undertaken in the manner explained with the aid of Figure 1. The interpolation is effected by the circuitry shown in Figure 2 which corresponds to the digital to analog unit 36 of Figure 3.

In a colour television camera it is necessary to ensure common registration of all of the camera tubes in order to avoid imperfections in the final television image. This is achieved by the projection of a test chart within the prism system of the camera. Registration of each of the tubes is measured against the test chart and a correction signal is calculated for each camera tube and applied so as to correct the output thereof.

The tsst chart consists of a regular matrix of fifteen rows and fifteen columns of identical rectangular white areas on a black background. Each of the white area acts as a reference picture element.

A correction signal is provided for each of the camera tubes and since the process is the same for each tube a detailed description will be given with respect to one tube only.

The image produced by the camera tube is divided into 225 picture elements each of which should be in registration with a respective picture area of the test chart. For each of the picture elements in turn, the picture element signal is measured and is compared with the reference picture element. It will be appreciated that the reference picture elements are provided by the output of the reference tube, usually the green channel.

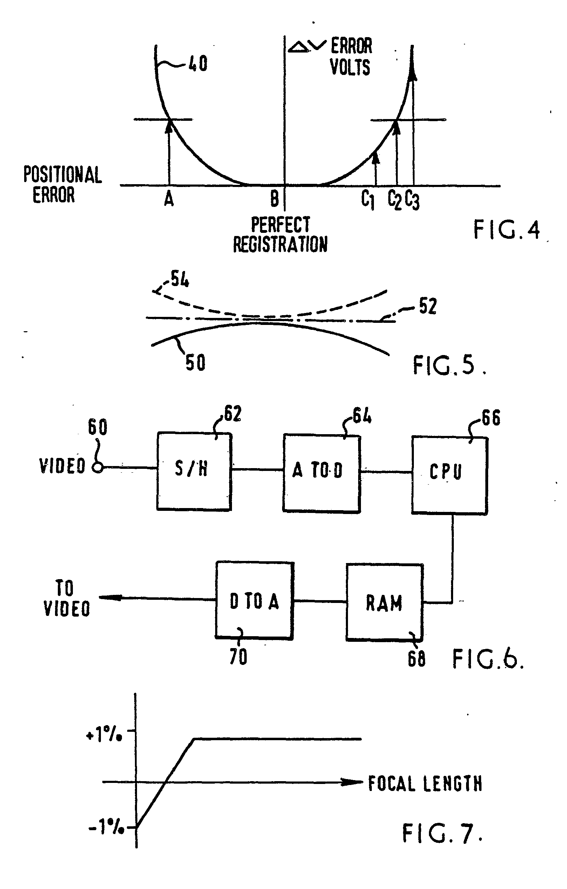

An error signal is generated corresponding to the error of registration between the picture element signal and the reference picture element. Figure 4 illustrates variation of the error signal 40.

The above procedure is repeated for all of the 225 picture elements. Subsequently, a correction signal is calculated for the camera tube by interpolation of the picture element error values.

A circuit for monitoring values from the picture elements may include gate location of the individual picture elements, registration error detector, analogue to digital conversion and storage in a RAM under the control of a CPU. The RAM stored values can be interpolated in real time to provide a correction signal which is applied for real time correction of the image defects.

Conventional interpolation techniques used in data processing utilise complex software. Such software can be expensive, difficult to maintain and will sometimes produce discontinuities in interpolation which would result in unacceptable positional changes in the final television image. Interpolation of the picture element error values in this embodiment of the present invention may utilise the scaling function of digital to analogue converters. Such an interpolation is described above with reference to Figures 1 and 2 of the drawings.

In a colour television camera it is particularly necessary to correct vignetting produced by the individual camera tubes in order to avoid colour shading being exhibited by the final image. The vignetting produced by the three colour camera tubes is unique for each colour.

A software generated flat field reference is compared with the actual video signal from each camera tube and the required correction signal for that tube is calculated. The correction signal is then applied to the output of the camera tube so that all images produced by the tube are corrected for vignetting.

A circuit for monitoring values from the picture elements may include gate location of the individual picture elements, sample and hold of the video level, analogue to digital conversion and storage in a RAM under the control of a CPU. The RAM stored values can be interpolated in real time to provide a correction signal which is applied for real time correction of the image defects.

Figure 5 illustrates the vignetting of a camera tube image and illustrates the required correction signal. The uncorrected image produced by a camera tube is represented by the line 50 which is curvilinear as opposed to the linear desired output 52. The curvilinear form of signal 50 is manifest as a darkening towards the edge of the image. This is the common phenomenon of vignetting which along with some tube and prism defects is also referred to in respect of colour television cameras as black and white shading. It will be appreciated from Figure 5 that a correction signal illustrated by the phantom line 54 must be added to the camera tube signal 50 so as to produce the desired output signal 52. The correction signal 54 is the complement of the signal 50.

The correction signal 54 is provided in the following manner. The video signal is monitored for each of a plurality of picture elements of the camera tube image. These picture element signals are each compared with a respective reference picture element signal forming part of the software generated flat field reference. Using the error values obtained from the comparison of each picture element with its reference, the correction signal 54 is calculated. A feedback configuration is used and the correction signal calculated in a repetitive sequence until the comparison reveals no error.

For white shading, the picture element signals are provided by the diascope within the camera tube and an external image is not therefore required to generate the picture elements.

Separate detectors are used for looking at Black Shading performance and White Shading. To improve immunity to noise the Black Shading detector integrates the whole of the sample area and produces a dc level to the A/D convertor which corresponds to the video level present at the location. As before multiple passes the picture are made with the analogue correction waveform being updated and applied to the video processing amplifier before the sample point, thus the effect of the correction will be monitored on successive passes. This iterative process enables the generated correction waveform to evolve step by step, until the correction waveform exactly offsets the black shading present. In this way black shading can be corrected to better than 0.5% of peak white, both absolutely and differentially, as measured after Gamma correction.

To measure White Shading errors the diascope pattern is again used and the video level measured by a peak detector. This dc level is A/D converted for use by a Microprocessor. Again multiple passes are used with the correction waveform steadily developing until an exact fit is obtained to the nearest increment of the value stored in memory. White Shading errors can be reduced to less than 1% after Gamma correction both absolutely and differentially by the technique. To overcome any deficiencies in the evenness of illumination of the diascope the camera has a routine to allow the difference between an externally illuminated flat field as seen through the lens and the diascope field to be stored and used to modify the results subsequently obtained with the diascope.

A simplified block diagram is given in Figure 6 in order to illustrate the apparatus for monitoring the picture element signals and calculating the correction signal. The video signal from each picture element is applied in turn to the input 60. Each video signal is processed by a sample and hold unit 62 and subsequently passed to an analog to digital converter 64. The digital signals are passed to a CPU 66 under the control of which they are stored in a RAM 68. The values stored in the RAM 68 are interpolated so as to form the correction signal 54. Interpolation is undertaken using the scaling function of digital to analog converter in a digital to analog unit 70.

The interpolation includes multiplying error values, in digital form, from each of two adjacent picture elements by respective reference signals. The multiplied values are summed and a smoothed interpolation is provided. The unit 70 is formed of the circuit of Figure 2 and the interpolation is carried out as described with reference to Figures 1 and 2.

In the black shading case, the camera tubes of a colour television camera are supplied with bias lighting which reduces the lag which the tubes would otherwise exhibit in responding to the change in images viewed by the camera. However, the bias lighting does not represent a flat field and will consequently introduce shading in the final image unless correction is undertaken.

The colour television camera is set for operation but the lens cap is retained on the camera lens. Consequently, only the bias lighting is available for producing an output signal from the camera tubes. For each of the tubes a correction value is calculated to compensate for the fact that the bias lighting does not present a flat field. These correction signals are stored and applied to the output from the camera tubes during normal operation of the camera, so as to avoid shading in the final image being caused by the bias lighting. Only bias lighting is required within the camera and any diascope is switched off.

A circuit for monitoring values from the picture elements may include gate location of the individual picture elements, sample and hold of the video level, analogue to digital conversion and storage in a RAM under the control of a CPU. The RAM stored values can be interpolated in real time to provide a correction signal which is applied for real time correction of the image defects.

The calculation of a correction signal for one camera tube will now be described.

The correction of camera tube black shading comprises monitoring the signals produced by the bias lighting from each of a plurality of picture elements, comparing each monitored signal with a reference to provide an error value for each picture element, calculation of a correction signal from the error values and application of the correction signal so as to correct images produced by the camera tube. A feedback configuration is used in a repetitive sequence until no error is detected by the comparison.

The reference is software generated and interpolation is necessary in calculating the correction signal.

Conventional interpolation techniques used in data processing utilise complex software. Such software can be expensive, difficult to maintain and will sometimes produce discontinuities in interpolation.

Interpolation of the error values in this embodiment of the invention can utilise the scaling function of digital to analog converters. Such an interpolation is described above with reference to Figures 1 and 2.

Errors are introduced into the image produced by a television camera tube due to geometric phenomena of the camera. Such phenomena include geometry of the camera tube itself and non-linearities of image scanning within the camera tube. Automatic correction of such errors may be provided by this invention.

Image correction is achieved by monitoring picture element signals from an object, generating elemental signals of the desired image, comparing corresponding picture element and elemental signals, calculating a correction signal from said comparison and applying the correction signal to correct images produced by the camera tube.

A test chart containing a regular matrix of fifteen rows and fifteen columns of rectangular picture areas is located in front of the camera. The picture areas are identical and are simply rectangular areas of white on a black background.

Geometric correction may normally be considered to be the registration of green video to an electronic reference. The picture elements are then scanned and the signal from each picture element is stored for processing. It should be appreciated that these stored values will include accumulative errors caused by the various geometric phenomena produced within the camera.

A circuit for monitoring values from the picture elements may include gate location of the individual picture elements, geometry/registration detection, analogue to digital conversion and storage in a RAM under the control of a CPU. The RAM stored values can be interpolated in real time to provide a correction signal which is applied for real time correction of the image defects.

A reference generator generates elemental signals of the desired image which is, of course, an exact replica of the test chart. Corresponding picture element and elemental signals are compared by a comparator which generates a difference signal for each of the picture elements.

The difference signals represent the accumulative geometric errors.

A correction signal is calculated from the difference signals and is applied so as to correct images produced by the camera tube. A feedback configuration is used in a repetitive sequence until a minimum error is measured for all areas. Calculation of the correction signal is undertaken by processing means which utilise interpolation between adjacent difference signals. Control means are provided for storing the correction signal and applying the correction signal so as to correct images produced during normal operation of the camera tube.

Interpolation of the difference signals by the processing means utilises the scaling function of digital to analog converters. Difference values from adjacent picture elements are multiplied by a respective reference signal and the multiplied values are summed. The interpolation used is that described above with reference to Figures 1 and 2 of the drawings. The measurement and correction techniques are the same for both geometry and registration errors. The output of the green channel and an electronically generated version of the test pattern, which is taken as the reference, are compared location by location, first for vertical error detection and correction and then for horizontal detection and correction. The reference itself is switched through the detectors such that any errors in the detectors will be automatically compensated for.

Errors are detected by addressing the detector to each location in turn and determining what polarity of correction is required. Starting from a mid point value, the memory location for each sample is then incremented or decremented according to the sense of correction required. After each complete pass of the test pattern the memory values are read out and converted to an analogue waveform as previously described and applied to all three scan amplifiers to modify the scanning current waveforms. The procedure is then repeated until all locations are corrected to less than one increment of accuracy. To speed up the process the size of correction increments is large for the early passes and reduced as the routine proceeds. By this method the geometry of the green channel can be corrected to better than 0.1%. This figure of course excludes the lens geometry.

The same routine is used for correcting registration errors, except the reference is now the green channel, instead of the electronic reference and the correction waveform is applied to the Red or Blue scan amplifiers only, as appropriate. Registration to better than 0.05% of picture height, over the entire picture area is achieved using this method. To cope with the differences between the registration obtained using the diascope and that produced by the lens, the camera has a routine to enable it to "learn" the difference in errors. Having registered with the diascope, the camera is pointed at an optical chart having the same pattern as the diascope slide. The optimum distance between lens and chart is used, as specified by the lens manufacturer. The automatic routine is then repeated to register the camera under these conditions. The difference between the two sets of correction data is stored as a correction factor, which is then used to modify all subsequent line ups from the diascope. Correction factors for several lens types can be held in memory at the same time, as a coding system is used to enable the camera to recognise which type of lens is in current use.

The optical arrangement of a camera lens can introduce defects in the image produced by a camera tube. Such defects are particularly problematic where the focal length of the lens is varied, either by changing the lens or by using a zoom lens. In a colour television camera a zoom lens may have a focal length ratio of 42:1. Such drastic changes in focal length are, of course, accompanied by equally drastic changes in the field of view. Such changes severely aggravate the defects introduced into the camera tube image. Lateral chromatic abberation is also a particularly important problem for colour television broadcast cameras utilising zoom lenses of high focal length ratios.

These disadvantages are mitigated by producing a correction signal for correcting camera lens produced defects which are present in the camera tube image and by scaling the scanning amplitudes relative to the focal length of the lens. This form of compensation is particularly effective and relatively simple because the correction signal can be scaled essentially linearly with the focal length of the lens. The lens geometry changes particularly dramatically for wide angle setting and this is illustrated by the graph of Figure 7.

In order to generate the correction signal the image signal from each of a plurality of picture elements is measured. The picture element signals are each compared with a single or respective elemental reference so as to provide an error value for each picture element. The error values are stored in digital form and are interpolated to provide the correction signal. The picture elements may be generated by positioning a test chart in front of the camera. The test chart contains a regular matrix of fifteen rows and fifteen columns of identical rectangular areas of white shading on a black background.

A circuit for monitoring values from the picture elements may include gate location of the individual picture elements, geometry/registration detection, analogue to digital conversion and storage in a RAM under the control of a CPU. The RAM stored values can be interpolated in real time to provide a correction signal which is applied for real time correction of the image defects.

Conventional interpolation techniques used in data processing utilise complex software. Such software can be expensive, difficult to maintain and will sometimes produce discontinuities in interpolation.

Interpolation of the error values in this embodiment of the present invention can utilise the scaling function of digital to analog converters. Such an interpolation is described above with reference to Figures 1 and 2 of the drawings.

It will be appreciated that in each of the above embodiments automatic image correction is provided. Such correction may, in each case, use a feedback configuration whereby a correction is obtained, its effect monitored and repetitive adjustment undertaken until the optimum result is obtained.

Several embodiments of the present invention have been described above but it will be evident to those skilled in the art that many variations are possible without departing from the scope of the invention. For example, in some circumstances it may be advantageous for the reference signals V REF.1 and V REF.2 to have a non-linear form.

**Claims**

1. Apparatus (10) for correcting defects in an image having a plurality of picture elements, comprising, monitoring means (12) for measuring the value of a parameter from each of the picture elements, processing means (14) for calculating a correction signal from the parameter values and control means (16) for applying the correction signal to correct the image defects, characterised in that the processing means comprises two multipliers (2, 4) each of which multiplies one of two adjacent line or field parameter values (VALUE 1, VALUE 2) by a respective reference signal (V. REF 1, V.REF 2) which has a frequency equal to half the frequency of occurrence of the picture elements whose values are being multiplied, the reference signals (V.REF 1, V.REF 2) being anti-phase with each other, and by a summing circuit (6) for summing the multiplied values, whereby calculation of the correction signal includes a smoothed interpolation.

2. Apparatus (10) as claimed in Claim 1, characterised in that the measured parameter value is the optimum focus parameter value at each of the plurality of picture elements, and in that the control means (16) applies the correction signal to correct the focussing of images produced by an electro-optical tube.

3. Apparatus (10) as claimed in claim 2, characterised in that the means (12) for measuring includes means for testing the focus parameter value, for each picture element, over a preset range of focussing control values and means (24) for identifying the focussing control values, for each picture element, which results in the maximum focus parameter value amplitude, the identified control value representing the optimum focus for the picture element.

4. Apparatus as claimed in claim 3, characterised by a band pass filter (22) for filtering picture element signals such that only high frequency energy of the picture element signal is passed to the identifying means (24).

5. Apparatus as claimed in claim 3 or 4, characterised in that the identifying means (24) includes a peak-to-peak detector which detects the focus parameter value amplitude.

6. Apparatus for calculating relatively small spatial registration errors of an electro-optical tube characterised by;

a reference generator which generates a plurality of reference picture elements,

monitoring means which monitor the picture element signals of the tube derived from said reference picture elements,

comparator means which compare picture element and reference picture element signals,

displacement means which, for each picture element, displaces the picture element in a first direction to a position (A) of relatively large registration error, as measured by the comparator means, and which displaces the picture elements in a direction opposite the first direction to a position (C2) of substantially the same relatively large registration error, as measured by the comparator means,

processing means for calculating, from the displacements effected by the displacement means, the position of optimum spatial registration and an error signal representing the initial error in spatial registration of the picture element,

further processing means for calculating a correction signal from the calculated picture element error signals, the further processing means comprising two multipliers (2, 4) each of which multiplies one of two adjacent line or field parameter values (VALUE 1, VALUE 2) by a respective reference signal (V.REF 1, V.REF 2) which has a frequency equal to half the frequency of occurrence of the picture elements whose values are being multiplied, the reference signals (V.REF 1, V.REF 2) being in anti-phase with each other, and a summing circuit (6) for summing the multiplied values, whereby calculation of the correction signal includes a smoothed interpolation, and

control means for applying the correction signal to compensate images produced by the camera tube for errors in spatial registration of the tube.

7. Apparatus as claimed in Claim 1, characterised in that the control means applies the correction signal (54) to correct vignetting of images.

8. Apparatus as claimed in claim 7, characterised in that the picture elements are generated by a diascope within a camera tube.

9. Apparatus as claimed in claim 1, characterised by the monitoring means monitoring the signals produced by bias lighting from each of the plurality of picture elements, comparator means for comparing each monitored signal with a reference to provide an error value for each picture element, the processing means calculating a correction signal from the error values and the control means applying the correction signal to correct image black shading.

10. Apparatus as claimed in Claim 1, characterised in that the control means applies the correction signal to correct errors in the image produced by an electro-optical tube due to geometric phenomena.

11. Apparatus as claimed in Claim 1, characterised by the correction of camera lens produced defects in an image produced by a camera tube and by scaling means for scaling the correction signal in accordance with variations of the focal length of camera lens.

12. Apparatus as claimed in claim 11, characterised in that the scaling means scales the correction signal linearly in accordance with variations of the focal length of the camera lens.

13. Apparatus as claimed in any preceding claim, characterised by the processing means including means for undertaking a repetitive feedback technique in calculation of the correction signal.

14. Apparatus as claimed in any preceding claim, characterised in that the parameter values are in digital form and each multiplier (2, 4) comprises a digital to analog converter.

15. Apparatus as claimed in any preceding claim, characterised in that the reference signals are linear between maxima and minima.

16. Apparatus as claimed in any of claims 1, 2, 3, 4, 5, 6, 9, 10, 11, or 12, further characterised by a test chart having a regular matrix of identical and separate rectangles, the rectangles providing respective image elements for the picture elements.

17. A television camera characterised by the apparatus of any preceding claim.

18. A method of correcting defects in an image having a plurality of picture elements, comprising measuring the value of a parameter of each of the plurality of picture elements, calculating a correction signal from the parameter values and applying the correction signal to correct image defects, characterised in that calculation of the correction signal includes multiplying each of two adjacent line or field parameter values by a respective reference signal which has a frequency equal to half the frequency of occurrence of the picture elements whose values are being multiplied, the reference signals being in anti-phase with each other, and by summing the multiplied values, whereby the calculation includes a smoothed interpolation.

19. A method as claimed in claim 18, characterised in that the measured parameter value is the optimum focus parameter value at each of the plurality of picture elements, and in that the correction signal is applied to correct the focussing of images produced by an electro-optical tube.

20. A method a claimed in claim 19, characterised by, for each of the picture elements, testing a preset range of focussing control values and identifying the control value which results in the maximum focus parameter value amplitude, the identified control value representing the optimum focus for the picture element.

21. A method as claimed in claim 20, characterised by the step of band pass filtering picture element signals such that high frequency energy of the picture element is used for identifying the maximum focus parameter value amplitude.

22. A method as claimed in claim 21, including the peak-to-peak detection of focus parameter value amplitude.

23. A method of calculating relatively small errors in the spatial registration of an electro-optical tube characterised by the steps of:

providing a plurality of reference picture elements,

monitoring the picture element signals of the tube derived from said reference picture elements,

comparing picture element and reference picture element signals for each picture element,

displacing the picture element in a first direction to a position of relatively large registration error,

displacing the picture element in a direction opposite the first direction to a position of substantially the same relatively large registration error,

calculating, from the displacements effected, the position of optimum spatial registration and an error signal representing the initial error in spatial registration of the picture element,

calculating a correction signal from the calculated picture element error signals, the calculation of the correction signal including multiplying each of two adjacent line or field parameter values by a respective reference signal which has a frequency equal to half the frequency of occurrence of the picture elements whose values are being multiplied, the reference signals being in anti-phase with each other, and summing the multiplied values, whereby the calculation includes a smoothed interpolation, and

applying the correction signal to compensate images produced by the tube for errors in spatial registration of the tube.

24. A method as claimed in claim 18, characterised by applying the correction signal to correct vignetting of images.

25. A method as claimed in claim 24, characterised by the provision of a diascope within the camera tube having a regular matrix of identical picture areas.

26. A method as claimed in claim 18, characterised by the measuring of the parameter value comprising monitoring the signals produced by bias lighting from each of the plurality of picture elements by comparing each monitored signal with a reference to provide an error value for each picture element by calculating a correction signal from the error values and by applying the correction signal to correct image black shading.

27. A method as claimed in claim 18, characterised by applying the correction signal to correct errors in the image produced by an electro-optical tube due to geometric phenomena.

28. A method as claimed in claim 18, characterised by the correction of camera lens produced defects in an image produced by a camera tube, and by scaling the correction signal in accordance with variations of the focal length of the camera lens.

29. A method as claimed in claim 28, characterised by scaling the correction signal linearly in accordance with variations of the focal length of the camera lens.

30. A method as claimed in claims 18 to 29, characterised by undertaking a repetitive feedback technique in calculation of the correction signal.

31. A method as claimed in any of claims 18 to 30, characterised by multiplying the parameter values, in digital form, and reference signals together in respective digital to analog converters.

32. A method as claimed in any of claims 18 to 30, characterised by selecting the reference signals to be linear between maxima and minima.

33. A method as claimed in any of claims 18, 19, 20, 21, 22, 23, 26, 27, 28, or 29, characterised by the provision of a test chart containing a regular matrix of identical and separate rectangles and arranging the test chart such that the rectangles present a image element for respective picture elements.

**Patentansprüche**

1. Vorrichtung (10) zum Korrigieren von Fehlern in einem Bild mit einer Vielzahl von Bild- oder Rasterelementen umfassend: Überwachungseinrichtungen (12) zum Messen des Wertes eines Parameters von jedem der Bildelemente, Verarbeitungseinrichtungen (14) zum Errechnen eines Korrektursignals aus den Parameterwerten und Regeleinrichtungen (16) zum Anbringen des Korrektursignals zur Bildfehlerkorrektur, dadurch gekennzeichnet, daß die Verarbeitungseinrichtungen zwei Vervielfacher (2, 4) aufweisen, von denen ein jeder einen von zwei benachbarten Linien- oder Feldparameterwerten (WERT 1, WERT 2) mit einem jeweiligen Bezugssignal (V.REF 1, V.REF 2) multipliziert, das eine Frequenz gleich der halben Frequenz des Auftretens der Bildelemente hat, deren Werte vervielfacht werden, wobei die Bezugssignale (V.REF 1, V.REF 2) gegenphasig zueinander sind; und durch einen Summierkreis (6) zum Summieren der multiplizierten Werte, wodurch die Berechnung des Korrektursignals eine geglättete Interpolation einschließt.

2. Vorrichtung (10) nach Anspruch 1, dadurch gekennzeichnet, daß der gemessene Parameterwert der optimale Fokusparameterwert an jedem aus der Vielzahl von Bildelementen ist und daß die Regeleinrichtungen (16) das Korrektursignal zum Korrigieren des Fokussierens der Bilder anlegen, welche durch eine elektrooptische Röhre erzeugt wurden.

3. Vorrichtung (10) nach Anspruch 2, dadurch gekennzeichnet, daß die Einrichtungen (12) zum Messen Mittel zum Prüfen des Fokusparameterwertes für jedes Bildelement über einen voreingestellten Bereich von Fokussierregelwerten umfassen und Einrichtungen (24) zum Identifizieren der Fokussierregelwerte für jedes Bildelement vorgesehen sind, was in der Maximumvokusparameterwertamplitude resultiert, wobei der identifizierte Regelwert den optimalen Fokus für das Bildelement darstellt.

4. Vorrichtung nach Anspruch 3, gekennzeichnet durch ein Bandpaßfilter (22) zum Filtern der Bildelementsignale, derart, daß nur Hochfrequenzenergie des Bildelementsignals an die Identifizierungseinrichtungen (24) durchgelassen wird.

5. Vorrichtung nach Anspruch 3 oder 4, dadurch gekennzeichnet, daß die Identifizierungseinrichtungen (24) einen Spitzen-Spitzen-Detektor umfassen, der die Fokusparameterwertamplitude erfaßt.

6. Vorrichtung zum Berechnen relativ kleiner räumlicher Registrier- bzw. Deckungsfehler eine elektrooptischen Röhre, gekennzeichnet durch einen Bezugsgenerator, der eine Vielzahl von Bezugsbildelementen erzeugt,

Überwachungseinrichtungen, die die Bildelementsignale der Röhre, die aus den Bezugsbildelementen abgeleitet sind, überwachen,

Vergleichereinrichtungen, die Bildelement- und Bezugsbildelementsignale vergleichen,

Verschiebungseinrichtungen, die für jedes Bildelement das Bildelement in einer ersten Richtung in eine Stellung (A) eines relativ großen Registrierungs- oder Deckungsfehlers, gemessen durch die Komparatoreinrichtungen, verschieben und welche die Bildelemente in einer Richtung entgegengesetzt zur ersten Richtung in eine Stellung (C2) von im wesentlichen dem gleichen relativ großen Registrierungsfehler, gemessen durch die Komparatoreinrichtungen, verschieben,

Verarbeitungseinrichtungen, um aus den von den Verschiebungseinrichtungen vorgenommenen Verschiebungen die Position der optimalen räumlichen Registrierung bzw. Deckung sowie ein Fehlersignal errechnen, welches den Anfangsfehler in der räumlichen Registrierung oder Deckung des Bildelementes darstellen,

weitere Verarbeitungseinrichtungen, um ein Korrektursignal aus den errechneten Bildelementfehlersignalen zu errechnen, wobei die weiteren Verarbeitungseinrichtungen zwei Vervielfacher (2, 4) aufweisen, von denen ein jeder eine von zwei benachbarten Linien- oder Feldparameterwerten (WERT 1, WERT 2) mit einem jeweiligen Bezugssignal (V.REF 1, V.REF 2) multipliziert, welches eine Frequenz gleich der halben Frequenz des Auftretens der Bildelemente, deren Werte vervielfacht werden, hat, wobei die Bezugssignale (V.REF 1, V.REF 2) gegenphasig zueinander sind und ein Summierkreis (6) vorgesehen ist, um die multiplizierten Werte zu summieren, wodurch eine Berechnung des Korrektursignals eine geglättete Interpolation umfaßt, und

Regeleinrichtungen, um das Korrektursignal anzulegen, um durch die Kameraröhre erzeugte Bilder hinsichtlich Fehlern in der räumlichen Registrierung oder Deckung der Röhre zu kompensieren.

7. Vorrichtung nach Anspruch 1, dadurch gekennzeichnet, daß die Regeleinrichtungen das Korrektursignal (54) zur Vignettierungskorrektur von Bildern eingeben.

8. Vorrichtung nach Anspruch 7, dadurch gekennzeichnet, daß die Bildelemente durch ein Diaskop innerhalb einer Bildaufnahmeröhre erzeugt werden.

9. Vorrichtung nach Anspruch 1, dadurch gekennzeichnet, daß die Überwachungseinrichtungen die Signale überwachen, welche durch die Bildausleuchtung bzw. Fehler von jedem der Vielzahl von Bildelementen erzeugt wurden, Komparatoreinrichtungen zum Vergleichen jedes überwachten Signals mit einem Bezug zum Liefern eines Fehlerwertes für jedes Bildelement, wobei die Verarbeitungseinrichtungen ein Korrektursignal aus den Fehlerwerten errechnen und die Regeleinrichtungen das Korrektursignal zum Korrigieren der Bildschwarzschattierung anlegen.

10. Vorrichtung nach Anspruch 1, dadurch gekennzeichnet, daß die Regeleinrichtungen das Korrektursignal anlegen, um Fehler im Bild zu korrigieren, die aufgrund geometrischer Phänomene durch eine elektrooptische Röhre erzeugt werden.

11. Vorrichtung nach Anspruch 1, gekennzeichnet durch die Korrektur von durch die Kameralinse erzeugten Fehlern in einem von einer Bildaufnahmeröhre erzeugten Bild und durch Skaliereinrichtungen zum Skalieren bzw. maßstäblichen Veränderns des Korrektursignals entsprechend den Veränderungen der Brennweite einer Bildaufnahmelinse bzw. -objektiv.

12. Vorrichtung nach Anspruch 11, dadurch gekennzeichnet, daß die Skaliereinrichtung das Korrektursignal linear entsprechend den Veränderungen der Brennweite der Bildaufnahmelinse skaliert.

13. Vorrichtung nach einem der vorhergehenden Ansprüche, dadurch gekennzeichnet, daß die Verarbeitungseinrichtung Mittel umfaßt, die eine wiederholte Feedbacktechnik in der Berechnung des Fehlersignals vornehmen.

14. Vorrichtung nach einem der vorhergehenden Ansprüche, dadurch gekennzeichnet, daß die Parameterwerte in digitaler Form vorliegen und jeder Vervielfacher (2, 4) einen Digital-Analog-Wandler aufweist.

15. Vorrichtung nach einem der vorhergehenden Ansprüche, dadurch gekennzeichnet, daß die Bezugssignale zwischen maxima und minima linear sind.

16. Vorrichtung nach einem der Ansprüche 1, 2, 3, 4, 5, 6, 9, 10, 11 oder 12, weiter gekennzeichnet durch ein Testbild mit einer regulären Matrix identischer und gesonderter Rechtecke, wobei die Rechtecke jeweilige Bildelemente für die Rasterbildelemente liefern.

17. Fernsehkamera, gekennzeichnet durch eine Vorrichtung nach einem der vorhergehenden Ansprüche.

18. Verfahren zum Korrigieren von Fehlern in einem Bild mit einer Vielzahl von Bildrasterelementen umfassend: das Messen des Wertes eines Parameters jedes aus der Vielzahl von Bildelementen; das Berechnen eines Fehlersignals aus den Parameterwerten und das Eingeben des Fehlersignals zum Korrigieren von Bildfehlern, dadurch gekennzeichnet, daß die Berechnung des Fehlersignals umfaßt: das Multiplizieren jedes von zwei benachbarten Linien- oder Feldparameterwerten mit einem jeweiligen Bezugssignal, das über eine Frequenz gleich der halben Frequenz des Auftretens der Bildelemente hat, deren Werte vervielfacht werden, wobei die Bezugssignale gegenphasig zueinander sind und die multiplizierten Werte summiert werden, wodurch die Berechnung eine geglättete Interpolation einschließt.

19. Verfahren nach Anspruch 18, dadurch gekennzeichnet, daß der gemessene Parameterwert der Optimumbrennweitenwert an jedem der Vielzahl von Bildelementen ist und daß das Korrektursignal eingegeben wird, um das Fokussieren der durch eine elektrooptische Röhre erzeugten Bilder zu korrigieren.

20. Verfahren nach Anspruch 19, dadurch gekennzeichnet, daß für jedes der Bildelemente ein voreingestellter Wert von fokussierenden Regelwerten untersucht wird und der Regelwert identifiziert wird, der zu maximalen Brennweitenparameterwertamplitude führt, wobei der identifizierte Regelwert die optimale Brennweite für das Bildelement darstellt.

21. Verfahren nach Anspruch 20, dadurch gekennzeichnet, daß Bildelementsignale bandpaßfiltriert werden, derart, daß die Hochfrequenzenergie des Bildelements ausgenutzt wird, um die maximale Brennweitenparameterwertamplitude zu identifizieren.

22. Verfahren nach Anspruch 21, das die Spitzen-Spitzen-Ermittlung der Brennweitenparameterwertamplitude umfaßt.

23. Verfahren zum Berechnen relativ kleiner Fehler in der räumlichen Registrierung bzw. Deckung einer elektrooptischen Röhre, gekennzeichnet durch die folgenden Stufen:

Vorsehen einer Vielzahl von Bezugsbildelementen, Überwachen der Bildelementsignale der Röhre, die aus den Bezugsbildelementen abgeleitet sind,

Vergleichen der (Raster)bildelement- und Bezugsbildelementsignale für jedes Bildelement,

Verschieben des Bildelements in einer Richtung in eine Stellung relativ großen Registrier- bzw. Deckungsfehlers,

Verschieben des Bildelements in eine Richtung entgegengesetzt der ersten Richtung in eine Lage im wesentlichen des gleichen relativen großen Registrierfehlers,

Errechnen, aus den vorgenommenen Verschiebungen, der Lage der optimalen räumlichen Registrierung und eines Fehlersignals, das den Anfangsfehler in der räumlichen Registrierung des Bildelementes darstellt, Errechnen eines Korrektursignals aus den errechneten Bildelementfehlersignalen, wobei das Errechnen des Korrektursignals das Vervielfachen jedes von zwei benachbarten Linien- oder Feldparameterwerten mit einem jeweiligen Bezugssignal einschließt, welches über eine Frequenz gleich der halben Frequenz des Auftretens der Bildelemente verfügt, deren Werte vervielfacht werden, wobei die Bezugssignale gegenphasig zueinander sind, und

Summieren der multiplizierten Werte, wodurch die Berechnung eine geglättete Interpolation einschließt, und

Eingeben des Korrektursignals zum Kompensieren von durch eine Röhre erzeugten Bildern hinsichtlich der Fehler in der räumlichen Registrierung oder Deckung der Röhre.

24. Verfahren nach Anspruch 18, dadurch gekennzeichnet, daß das Korrektursignal angelegt wird, um das Vignettieren von Bildern zu korrigieren.

25. Verfahren nach Anspruch 24, dadurch gekennzeichnet, daß ein Diaskop innerhalb der Bildaufnahmeröhre vorgesehen wird, das eine regelmäßige Matrix identischer Bildbereiche hat.

26. Verfahren nach Anspruch 18, dadurch gekennzeichnet, daß das Messen des Parameterwerts umfaßt: Überwachen der durch Schrägausleuchtung erzeugten Signale aus jedem der Vielzahl von Bildelementen durch Vergleichen jedes überwachten Signals mit einem Bezug, um einen Fehlerwert für jedes Bildelement zu liefern, indem ein Korrektursignal aus den Fehlersignalen errechnet wird und indem das Korrektursignal zum Korrigieren von Bildschwärzungsschattierungen eingegeben wird.

27. Verfahren nach Anspruch 18, dadurch gekennzeichnet, daß das Korrektursignal eingegeben wird, um Fehler im Bild zu korrigieren, welche durch eine elektro-optische Röhre aufgrund geometrischer Phänomene erzeugt werden.

28. Verfahren nach Anspruch 18, dadurch gekennzeichnet, daß durch die Bildaufnahmelinsen erzeugte Fehler in einem durch die Bildaufnahmeröhre erzeugten Bild korrigiert werden und daß das Korrektursignal entsprechend den Veränderungen der Brennweite der Kameralinse bzw. des Bildaufnahmeobjektivs skaliert bzw. im Maßstab festgelegt oder verändert werden.

29. Verfahren nach Anspruch 28, dadurch gekennzeichnet, daß das Skalieren bzw. Festlegen im Maßstab des Korrektursignals linear entsprechend Veränderungen in der Brennweite der Kameralinse bzw. des Kameraobjektivs vorgenommen werden.

30. Verfahren nach einem der Ansprüche 18 bis 29, dadurch gekennzeichnet, daß eine wiederholte Feedback-Technik in der Errechnung des Korrektursignals durchgeführt wird.

31. Verfahren nach einem der Ansprüche 18 bis 30, dadurch gekennzeichnet, daß die Parameterwerte in digitaler Form und die Bezugssignale zusammen in jeweiligen Digital-Analog-Umsetzern multipliziert werden.

32. Verfahren nach einem der Ansprüche 18 bis 30, dadurch gekennzeichnet, daß die Bezugssignale zwischen den maxima und minima linear gewählt werden.

33. Verfahren nach einem der Ansprüche 18, 19, 20, 21, 22, 23, 26, 27, 28 oder 29, dadurch gekennzeichnet, daß ein Testbild vorgesehen wird, das eine regelmäßige Matrix aus identischen und gesonderten Rechtecken enthält und daß das Testbild derart angeordnet wird, daß die Rechtecke ein Bildelement für die jeweiligen Bildrasterelemente darstellen.

**Revendications**

1. Appareil (10) pour corriger des défauts dans une image présentant une pluralité d'éléments d'image, comportant des moyens de contrôle (12) pour mesurer la valeur d'un paramètre à partir de chacun des éléments d'image, des moyens de traitement (14) pour calculer un signal de correction à partir des valeurs de paramètre et des moyens de commande (16) pour appliquer le signal de correction afin de corriger les défauts d'image, caractérisé en ce que les moyens de traitement comportent deux multiplicateurs (2, 4) chacun d'eux multipliant l'une de deux valeurs adjacentes de paramètre de ligne ou de trame (VALUE 1, VALUE 2) par un signal de référence respectif (V.REF 1, V.REF 2) qui a une fréquence égale à la moitié de la fréquence d'apparition des éléments d'image dont les valeurs sont multipliées, les signaux de référence (V.REF 1, V.REF 2) étant en opposition de phase l'un avec l'autre, et par un circuit de sommation (6) destiné à faire la somme des valeurs multipliées, le calcul du signal de correction comprenant ainsi une interpolation lissée.

2. Appareil (10) selon la revendication 1, caractérisé en ce que la valeur de paramètre mesurée est la valeur du paramètre de focalisation optimale en chacun des éléments de la pluralité des éléments d'image, et en ce que les moyens de commande (16) appliquent le signal de correction à la correction de la focalisation d'images produites par un tube électro-optique.

3. Appareil (10) selon la revendication 2, caractérisé en ce que les moyens (12) pour mesurer comportent des moyens pour tester la valeur du paramètre de focalisation pour chaque élément d'image sur une gamme prédéterminée de valeurs de commande de focalisation, et des moyens (24) pour identifier les valeurs de commande de focalisation qui donnent, pour chaque élément d'image, l'amplitude maximale de la valeur du paramètre de focalisation, la valeur de commande identifiée correspondant à la focalisation optimale pour l'élément d'image.

4. Appareil selon la revendication 3, caractérisé par un filtre passe-bande (22) pour filtrer des signaux d'éléments d'image de manière que seule l'énergie à haute fréquence du signal d'élément d'image passe vers les moyens d'identification (24).

5. Appareil selon la revendication 3 ou 4, caractérisé en ce que les moyens d'identification (24) comportent un détecteur crête—crête qui détecte l'amplitude de la valeur du paramètre de focalisation.

6. Appareil pour calculer des erreurs de superposition spatiale relativement faibles d'un tube électro-optique, caractérisé par:

un générateur de référence qui produit une pluralité d'éléments d'image de référence,

des moyens de contrôle qui contrôlent les signaux d'éléments d'image du tube obtenus à partir desdits éléments d'image de référence,

des moyens comparateurs qui comparent des signaux d'éléments d'image et des signaux d'éléments d'image de référence,

des moyens de déplacement qui, pour chaque élément d'image, déplacent l'élément d'image dans une première direction dans une position (A) d'erreur de superposition relativement grande, telle qu'elle est mesurée par les moyens comparateurs, et qui déplacent les éléments d'image dans une direction opposée à la première direction dans une position (C2) présentant sensiblement la même erreur de superposition relativement grande, telle qu'elle est mesurée par les moyens comparateurs,

des moyens de traitement pour calculer, a partir des déplacements effectués par les moyens de déplacement, la position de superposition spatiale optimale et un signal d'erreur correspondant à l'erreur initiale de superposition spatiale de l'élément d'image,

d'autres moyens de traitement pour calculer un signal de correction à partir des signaux d'erreur calculés de l'élément d'image, les autres moyens de traitement comportant deux multiplicateurs (2, 4), chacun d'eux multipliant l'une de deux valeurs adjacentes de paramètre de ligne ou de trame (VALUE 1, VALUE 2) par un signal de référence respectif (U.REF 1, U.REF 2) qui a une fréquence égale à la moitié de la fréquence d'apparition des éléments d'image dont les valeurs sont multipliées, les signaux de référence (V.REF 1, V.REF 2) étant en opposition de phase l'un par rapport à l'autre, et un circuit de sommation (6) pour faire la somme des valeurs multipliées, le calcul du signal de correction comprenant ainsi une interpolation lissée, et

des moyens de commande pour appliquer le signal de correction pour corriger des images produites par le tube de caméra en ce qui concerne les erreurs de superposition spatiale de ce tube.

7. Appareil selon la revendication 1, caractérisé en ce que les moyens de commande appliquent le signal de correction (54) pour corriger le vignettage des images.

8. Appareil selon la revendication 7, caractérisé en ce que les éléments d'image sont produits par un diascope à l'intérieur d'un tube de caméra.

9. Appareil selon la revendication 1, caractérisé par les moyens de contrôle contrôlant les signaux produits par éclairage arrière à partir de chacun des éléments de la pluralité d'éléments d'image, des moyens comparateurs pour comparer chaque signal contrôlé avec une référence pour fournir une valeur d'erreur pour chaque élément d'image, les moyens de traitement calculant un signal de correction à partir des valeurs d'erreur et les moyens de commande appliquant le signal de correction pour effectuer la correction de tache au noir de l'image.

10. Appareil selon la revendication 1, caractérisé en ce que les moyens de commande appliquent le signal de correction pour corriger des erreurs dans l'image produite par un tube électro-optique, dues à des phénomène géométriques.

11. Appareil selon la revendication 1, caractérisé par la correction des défauts produits par l'objectif d'une caméra dans une image produite par un tube de caméra et par des moyens de pondération pour pondérer le signal de correction en fonction des variations de la distance focale de l'objectif de la caméra.

12. Appareil selon la revendication 11, caractérisé en ce que les moyens de pondération pondèrent le signal de correction linéairement en fonction des variations de la distance focale de l'objectif de la caméra.

13. Appareil selon l'une quelconque des revendications précédentes, caractérisé en ce que les moyens de traitement comportent des moyens pour mettre en oeuvre une technique de réaction répétitive dans le calcul du signal de correction.

14. Appareil selon l'une quelconque des revendications précédentes, caractérisé en ce que les valeurs de paramètres sont sous forme numérique et que chaque multiplicateur (2, 4) comporte un convertisseur numérique-analogique.

15. Appareil selon l'une quelconque des revendications précédentes, caractérisé en ce que les signaux de référence sont linéaires entre des maxima et des minima.

16. Appareil selon l'une quelconque des revendications 1, 2, 3, 4, 5, 6, 9, 10, 11 ou 12, caractérisé en outre par une mire présentant une matrice régulière de rectangles identiques et séparés, les rectangles fournissant des éléments d'image de mire respectifs pour les éléments d'image.

17. Caméra de télévision caractérisée par l'appareil suivant l'une quelconque des revendications précédentes.

18. Procédé pour corriger les défauts dans une image ayant une pluralité d'éléments d'image, comprenant la mesure de la valeur d'un paramètre de chacun des éléments de la pluralité d'éléments d'image, le calcul d'un signal de correction à partir des valeurs de paramètre et l'application du signal de correction pour corriger des défauts d'image, caractérisé en ce que le calcul du signal de correction comprend la multiplication de chacune de deux valeurs adjacentes de paramètre de lignes ou de trame par un signal de référence respectif qui a une fréquence égale à la moitié de la fréquence d'apparition des éléments d'image dont les valeurs sont multipliées, les signaux de référence étant en opposition de phase l'un par rapport à l'autre, et par la sommation des valeurs multipliées, le calcul comportant ainsi une interpolation lissée.

19. Procédé selon la revendication 18, caractérisé en ce que la valeur de paramètre mesurée est la valeur du paramètre de focalisation optimale en chacun des éléments de la pluralité d'éléments d'image et en ce que le signal de correction est appliqué pour corriger la focalisation des images produites par un tube électro-optique.

20. Procédé selon la revendication 19, caractérisé, pour chacun des éléments d'image, par le test d'une gamme prédéterminée de valeurs de commande de focalisation et par l'identification de la valeur de commande qui donne l'amplitude maximale de la valeur du paramètre de focalisation, la valeur de commande identifiée correspondant à la focalisation optimale pour l'élément d'image.

21. Procédé selon la revendication 20, caractérisé par la phase de filtrage au moyen d'un filtre passe-bande des signaux d'éléments d'image de manière que l'énergie haute fréquence de l'élément d'image soit utilisée pour identifier l'amplitude maximale de la valeur du paramètre de focalisation.

22. Procédé selon la revendication 21, comportant la détection crête-crête de l'amplitude de la valeur du paramètre de focalisation.

23. Procédé pour calculer des erreurs relativement faibles dans la superposition spatiale d'un tube électro-optique, caractérisé par les phases de:

création d'une pluralité d'éléments d'image de référence,

contrôle des signaux d'éléments d'image du tube obtenus à partir desdits éléments d'image de référence,

comparaison des signaux d'éléments d'image et des signaux d'éléments d'image de référence, pour chaque élément d'image,

déplacement de l'élément d'image dans une première direction dans une position d'erreur de superposition relativement grande,

déplacement de l'élément d'image dans une direction opposée à la première direction dans une position présentant sensiblement la même erreur de superposition relativement grande,

calcul, à partir des déplacements effectués, de la position de superposition spatiale optimale et d'un signal d'erreur correspondant à l'erreur initiale de superposition spatiale de l'élément d'image,

calcul d'un signal de correction à partir des signaux d'erreurs calculés de l'élément d'image le calcul du signal de correction comprenant la multiplication de chacune de deux valeurs adjacentes de paramètre de ligne ou de trame par un signal de référence correspondant qui a une fréquence égale à la moitié de la fréquence d'apparition des éléments d'image dont les valeurs sont multipliées, les signaux de référence étant en opposition de phase d'un par rapport à l'autre, et la sommation des valeurs multipliées, le calcul comprenant ainsi une interpolation lissée, et

l'application du signal de correction pour compenser des images produites par le tube en ce qui concerne les erreurs de superposition spatiale de ce tube.

24. Procédé selon la revendication 18, caractérisé par l'application du signal de correction pour corriger le vignettage des images.

25. Procédé selon la revendication 24, caractérisé par la disposition d'un diascope à l'intérieur du tube de caméra, ayant une matrice régulière de zones d'image identiques.

26. Procédé selon la revendication 18, caractérisé en ce que la mesure de la valeur de paramètre comprend le contrôle des signaux produits par éclairage arrière à partir de chaque élément de la pluralité d'éléments d'image par comparaison de chaque signal contrôlé avec une référence pour fournir une valeur d'erreur pour chaque élément d'image en calculant un signal de correction à partir des valeurs d'erreur et en appliquant le signal de correction pour effectuer la correction de tache au noir de l'image.

27. Procédé selon la revendication 18, caractérisé par l'application du signal de correction pour corriger des erreurs dans l'image produite par un tube électro-optique à la suite de phénomènes géométriques.

28. Procédé selon la revendication 18, caractérisé par la correction des défauts produits par l'objectif d'une caméra dans une image produite par un tube de caméra, et par la pondération du signal de correction en fonction des variations de la distance focale de l'objectif de la caméra.

29. Procédé selon la revendication 28, caractérisé par la pondération du signal de correction linéairement en fonction des variations de la distance focale de l'objectif de la caméra.

30. Procédé selon les revendications 18 à 29, caractérisé en ce qu'on met en oeuvre une technique de réaction répétitive dans le calcul du signal de correction.

31. Procédé selon l'une quelconque des revendications 18 à 30, caractérisé par la multiplication des valeurs de paramètre sous forme numérique, avec les signaux de référence, dans des convertisseurs numériques-analogiques respectifs.

32. Procédé selon l'une quelconque des revendications 18 à 30, caractérisé par le choix des signaux de référence pour avoir une linéarité entre des maxima et des minima.

33. Procédé selon l'une quelconque des revendications 18, 19, 20, 21, 22, 23, 26, 27, 28 ou 29, caractérisé par la mise en oeuvre d'une mire présentant une matrice régulière de rectangles identiques et séparés, et la disposition de cette mire de manière que les rectangles fournissent un élément image de mire pour des éléments d'image correspondants.

FIG.I.

FIG.2.

FIG. 3.

FIG.4

FIG.5.

FIG.6.

FIG.7.